# EUROPEAN PATENT SPECIFICATION

(11) **EP 1 837 216 B1**
(45) Date of publication and mention of the grant of the patent: **26.11.2008**
(21) Application number: 07104190.9
(22) Date of filing: 15.03.2007
(51) Int. Cl.: B60H 1/00

(54) **Cold air bypass downstream of the mixing flap**
Kaltluft-Bypass stromabwärts der Mischklappe
Passage de dérivation d'air froid en aval d'un volet de mélange

(30) Priority: 17.03.2006 DE 102006012400
(43) Date of publication of application: 26.09.2007
(73) Proprietor: Valeo Klimasysteme GmbH, 96476 Rodach (DE)
(72) Inventor: Derx, Siegfried, 96215 Lichtenfels (DE)
(74) Representative: Léveillé, Christophe

(56) References cited:
- EP-A1- 1 366 935
- EP-A2- 0 212 306
- FR-A1- 2 715 455
- US-B1- 6 581 678

## Description

The invention relates to a heating and ventilation system or air conditioning system for a motor vehicle. In particular the invention relates to a heating and ventilation system or air conditioning system with an additional fresh air bypass so that in mixed mode a warm air flow flanked by fresh air flows on both sides enters a mixing chamber.

In heating and ventilation systems or air conditioning systems such as those commonly used in modern motor vehicles, a fresh air flow that in the case of an air conditioning system can be cooled, for example, by an evaporator, passes through a heating heat exchanger to be heated. To regulate the temperature, a flap arrangement is generally provided by means of which the air flow volume passing through the heat exchanger and the air flow volume by-passing the heat exchanger can be regulated. This permits an infinitely variable temperature control.

Systems are known here in which the air flow heated in the heat exchanger and the fresh air flow from the fresh air conduit are brought together in a mixing chamber and directed to different air louvres or nozzles. Further flaps and control elements can be provided to control the air distribution to the flaps.

With such a parallel arrangement of heat exchanger and cold air conduit, an air stratification occurs when the heated air is brought together with the fresh air that by-passed the heat exchanger, i.e. in mixed mode with one part of the air flow being directed through the heat exchanger and another part of the air flow by-passing the heat exchanger, a section with heated air and a section with cold air is created in the mixing chamber, these being brought together in the mixing chamber. This type of stratified air flow is split and directed to the various outlet openings, such as for example defroster nozzles, dashboard nozzles, foot space nozzles. In this type of system, the dashboard nozzles are generally arranged closer to the section with cold air and the footpace nozzles or defroster nozzles close to the section with heated air in the mixing chamber. Such systems have the disadvantage, however, that some of the nozzles always tend to receive the warm air and others always tend to receive the cold air, and a setting to suit individual wishes is not possible. In particular the louvre furthest from the cold air section in the mixing chamber, such as e.g. the defroster nozzles, receives cold air only when the heating and ventilation system is in its coldest position.

Alternatively so-called multi-air conditioning systems are known in which instead of a mixing chamber, the air flow is split into different conduits in order to direct it to different zones. These systems offer the advantage that different zones in the passenger compartment can be individually ventilated and/or heated with different temperatures, but also have the imminent disadvantage that a large number of flaps and conduits are required for this, with the associated high costs and design complexity.

Such systems are disclosed in FR 2 715 455, which is considered as the closest prior art, and in US 6 581 678, EP 1 366 935, and EP 0 212 306.

There is therefore a need for a heating and ventilation system or air conditioning system in which an air stratification is achieved in a mixing chamber in mixed mode without the use of additional zone conduits, with which the desired temperature can be provided at various points of the passenger compartment.

Furthermore, a heating and ventilation system or air conditioning system is desirable with which stratified air can be directed to defroster nozzles in mixed mode, or warm air can be supplied to the foot space nozzles, while defroster and dashboard nozzles are supplied with fresh air.

In order to overcome the problems and tasks described above, the invention proposes a heating and ventilation system for a motor vehicle according to Claim 1, with preferred embodiments being defined in the subclaims.

The heating and ventilation system for a motor vehicle according to the invention thereby comprises a heat exchanger, arranged between a first volume suitable for supplying a first air flow to the heat exchanger and a mixing chamber, a second volume arranged fluidically parallel to the first volume and fluidically parallel to the heat exchanger and suitable for diverting a second air flow past the heat exchanger into the mixing chamber, a first air flow control device provided fluidically upline of the first volume and the second volume to control the air volume flowing through the first volume or/and the second volume, whereby a by-pass is arranged fluidically downline of the first air flow control device between the first volume and the mixing chamber.

A volume is thereby a continuous chamber through which an air flow can be directed. The first volume is limited at least by the heat exchanger, a heating heat exchanger such as is normally used in motor vehicles, the first air flow control device, the by-pass and air guide elements or walls. Further elements can be provided. The second volume is limited at least by the first air flow control device and the mixing chamber. In addition, further elements such as air guide elements or walls can be provided. The second volume can, for example, also simply open out into the mixing chamber.

The fluidically parallel arrangement of the second volume to the first volume and to the heat exchanger thereby results in the air flowing through the heat exchanger parallel to the air flow in the first volume, so that the air flow from the heat exchanger and from the first volume enters the mixing chamber in a substantially parallel flow direction. This permits an effective control of the air flow distribution in the mixing chamber.

The additional by-pass provides a further connection from the first volume to the mixing chamber through which an air flow can be diverted past the heat exchanger into the mixing chamber. The by-pass provides a further area in the mixing chamber to which fresh air is supplied, so that a stratified air flow with two fresh air sections and one warm air section can be achieved in the mixing chamber.

The first air flow control device here allows the air distribution to the first volume and the second volume to be controlled. The first air flow control device can be set with linear intermediate positions between a hot position in which the air flow is directed via the first volume, and a cold position in which the air flow is directed through the second volume. In the cold position here, the complete volume of the mixing chamber is supplied with cold air. In the hot position, on the other hand, the complete volume of the mixing chamber is supplied with air heated by the heat exchanger. In the intermediate positions there are different distributions of cold and warm air in the mixing chamber.

Arranged fluidically downline of the mixing chamber are outlet openings, air louvres or nozzles that direct the air to various points in the passenger compartment. Defroster nozzles can be provided, for example, to direct an air flow towards the motor vehicle windows, in particular towards a windscreen. Dashboard nozzles can also be provided in the dashboard, for example, to direct an air flow towards the passengers. In addition, foot space nozzles can be provided to separately supply air to the foot space. These and other nozzles can be connected to the mixing chamber of the ventilation system, e.g. via conduits.

Each of the nozzles can furthermore have further air flow control devices to control the air flow volume and/or direction of the air flow individually at each nozzle.

Depending on the arrangement of the nozzles or the outlets to the nozzles or conduits, the air stratified in mixed mode in the mixing chamber is directed with different temperatures to the various nozzles. The air stratification in the mixing chamber and the air distribution can be controlled by means of the first air flow control device and the by-pass. The warm and cold air distribution depends here also on the arrangement of the heat exchanger, of the second volume and of the by-pass on the mixing chamber.

In a preferred embodiment of the heating and ventilation system, a second air flow control device is assigned to the by-pass. This enables the air volume flowing through the by-pass to be precisely controlled. In addition, it allows the air volume to be controlled independently of the first air flow control device. Depending on the setting of the first air flow control device and second air flow control device, the relationship between the three different air flows can also be freely set, allowing the air stratification in the mixing chamber to be better controlled.

In a preferred embodiment of the heating and ventilation system the by-pass is arranged at an opposite end of the heat exchanger from the second volume, and in at least one position of the air flow control devices, the air flow heated by the heat exchanger is flanked on one side in the mixing chamber by an air flow from the by-pass. This arrangement creates a cold-warm-cold air stratification in the mixing chamber, whereby the respective share of each stratum can be controlled by means of the first and second air flow control devices.

In a further preferred embodiment, the second air flow control device is a flap and arranged such that it closes the by-pass in a first position and opens it in a second position. In one embodiment, the second air flow control device can thereby have linear intermediate positions.

In an alternative embodiment the second air flow control device can only be controlled between its first and its second position. When the second air flow control device is open, there is thus always a given relationship in the mixing chamber between the cold air stratum flowing out of the by-pass and the warm air stratum flowing out of the heat exchanger that can be set by means of the arrangement and the cross section of the by-pass or the heat exchanger.

In a special embodiment the second air flow control device is a flap, in particular a butterfly flap, that closes the by-pass in its first position and opens the by-pass in its second position. The flap can thereby be arranged at the end of the by-pass, for example at the transition to the mixing chamber. The flap can also be arranged at the outlet from the by-pass such that it closes off the latter from the mixing chamber in such a way that swirling can be avoided in the mixing chamber.

In a preferred embodiment the by-pass has a taper with a smaller cross section than a cross section that can be closed off by the second air flow control device. As a result of the taper, the air flow is subjected to a resistance on passing through the by-pass that can be predetermined by means of the cross section of the taper and which determines the overall resistance of the by-pass conduit. The air flow resistance of the by-pass is thus independent of the position of the second air flow control device as long as the latter is not closed. This also ensures that the relationship between the cold air stratum flowing out of the by-pass and the warm air stratum flowing out of the heat exchanger is constant as long as the by-pass is not barred.

In a further preferred embodiment, the heat exchanger is arranged between the first volume and the mixing chamber in such a way that the first air flow enters at an angle of 0° to 60°, preferably at an angle of 0° to 45°. This creates a favourable inflow of air to the heat exchanger and to the by-pass and avoids heating or swirling of the air flow admitted to the by-pass. In addition, less back-pressure is built up.

In a preferred embodiment the first air flow control device and the second air flow control device are correlated and can be controlled, for example, with an operating element. Both flaps can, for example, be correlated by means of a lever and/or cam system. This offers users of the heating and air conditioning system the advantage that both air flow control devices can be controlled in such a way that the optimum effect is always achieved for the users without them needing to be informed about the position or setting of the individual air flow control devices.

In a further preferred embodiment, the first air flow control device can be set with linear intermediate positions between a hot position in which the air flow is directed via the first volume, and a cold position in which the air flow is directed through the second volume, with the first air flow control device and the second air flow control device being correlated in such a way that the second air flow control device is closed in both the cold position and the hot position of the first air flow control device, and that the second air flow control device is open in the intermediate positions of the first air flow control device. This advantageously creates different positions of the heating and ventilation system.

In the hot position, the complete air flow is directed by means of the first air flow control device into the first volume and from there, since in this position the by-pass is closed by means of the second air flow control device, is directed completely through the heat exchanger. This allows maximum heating to be achieved and the mixing chamber is completely filled with warm air, so that air heated to the maximum temperature is available at each louvre or each nozzle.

If the temperature control is reduced slightly, a smaller proportion of the air can first be directed through the second volume to the mixing chamber by a corresponding setting of the first air flow control device. The by-pass can initially remain barred. This creates a stratum with warm air and an edge stratum with fresh air or cooler or cold air in the mixing chamber. The dashboard nozzles are preferably arranged in the area of the cold air in the mixing chamber, so that cooler air is supplied to these nozzles than to the remaining louvres, such as e.g. foot space and defroster nozzles.

If the temperature control is further reduced to a predetermined level, for example to 80% of the maximum temperature, the by-pass is opened by means of the second air flow control element in addition to the air distribution to the second volume by means of the first air flow control element, as described above. As a result, a predetermined portion of the air flow directed into the first volume is directed past the heat exchanger to another side of the mixing chamber. In this configuration, the mixing chamber is supplied with one warm air section and two distinct cold air sections. Consequently cold air can also be supplied at least partially, for example to the defroster nozzles, in addition to the dashboard nozzles, as described above. The foot space nozzles are also predominantly supplied with warm air in this configuration. It will be obvious to persons skilled in the art that a different distribution of the warm and cold air flows can be achieved with a different arrangement of the louvres or nozzles on the mixing chamber. It will also be obvious to persons skilled in the art that the level of the temperature control at which the second air flow controller opens the by-pass is freely configurable and can be adapted to meet the requirements of the heating and ventilation system.

If the temperature level is further reduced, the first air flow control device is configured in such a way that with a further reduction, an ever increasing portion of the air flow is directed into the second volume, while consequently the portion flowing through the first volume becomes correspondingly smaller. As a result, the cold air portion in the mixing chamber that is directed via the second volume becomes correspondingly larger. The warm air portion and the cold air portion directed via the by-pass becomes correspondingly smaller, whereby the relationship between warm air portion and cold air portion from the by-pass remains constant if the position of the second air flow control device is not changed.

In the cold position finally, the whole air flow is directed via the second volume into the mixing chamber and the first volume is barred at the first air flow control device, as a result of which both the by-pass and the heat exchanger are no longer supplied with fresh air. In addition, the by-pass can be barred by means of the second air flow control device with this setting of the temperature controller in order to avoid a back-flow from the mixing chamber and to prevent air being circulated through the by-pass and the heat exchanger and thus being heated.

In a preferred embodiment the first air flow control device is thereby a flap, in particular a drum-type flap. A drum-type flap can, for example, be installed in the middle of the air flow and direct the air flow either to the first volume, to the heat exchanger and to the by-pass, or to the second volume. The total cross section of the opening thereby remains more or less constant so that irrespective of the position of the flap or changes in the flap position, the air throughput remains constantly high. In addition, the drum-type flap can assure the sealing of the volume not supplied with the air flow.

Here a drum-type flap permits a favourable distribution of air to the first volume and/or the second volume with linear intermediate positions. The air flow resistance thereby remains the same in all positions so that a uniform air flow is assured.

In a further preferred embodiment of the heating and ventilation system, an evaporator of an air conditioning system is arranged fluidically upline of the first air flow control device, whereby the evaporator and the heat exchanger are arranged to form an angle of roughly 45 to 135 degrees, in particular perpendicularly, to one another. The features of the invention with respect to a heating and ventilation system described above can also be advantageously employed in an air conditioning system. An evaporator can thereby be arranged fluidically upline of the first air flow control device so that air cooled by the evaporator can be directed into the first volume and/or the second volume, depending on the position of the first air flow control device.

The evaporator and the heat exchanger are preferably arranged spatially opposite one another. This arrangement has the advantage that the inlet and outlet lines of the heat exchanger supplied with the fluid and of the evaporator can be laid inexpensively, compactly and requiring little installation work parallel to one another. In addition, the arrangement at an angle of 45 to 135 degrees offers the advantage that the air conditioning system can be designed particularly compactly, a great advantage with the limited space available in modern dashboards.

In a further preferred embodiment the evaporator is arranged at least partially, in particular completely, in a projection volume perpendicular to a main surface of the heat exchanger. A lateral surface of the evaporator can thereby be arranged opposite the inlet surface of the heat exchanger with, for example, an air guide element or partition wall being arranged between the two. Such an arrangement significantly reduces the space requirement of an air conditioning system, and at the same time minimises the pipework required and the production costs.

In a further preferred embodiment, an air filter is arranged fluidically upline of the evaporator, whereby the evaporator and the air filter are arranged to form an angle of roughly 45 to 135 degrees, and whereby the air filter and the heat exchanger are offset from one another and arranged to mutually overlap in vertical and/or horizontal direction. A commercially available fan can, for example, be thereby arranged between the air filter and the evaporator that draws the air flow from the air filter and then delivers it in a diverted direction to the evaporator. This arrangement allows the distances between the individual units to be minimised. As a result of the offset and overlapping arrangement of the air filter and heat exchanger, the space-consuming elements of a motor vehicle air conditioning system are packed into a small space. This arrangement allows the space requirement of the whole air conditioning system unit to be further reduced.

Further features and advantages of the invention will become clearer when reading the following description of a preferred embodiment that makes reference to the attached drawings. The description is merely exemplary and is not intended as a limitation.
Figure 1 shows a heating and air conditioning system according to the invention with a arranged in a by-pass arranged fluidically downline of the first air flow control element and controlled by a second air flow control device, whereby the air flow control devices are shown with their movement possibilities;
Figure 2 shows the heating and air conditioning system from Figure 1 in hot position with the corresponding air flow;
Figure 3 shows the heating and air conditioning system from Figure 1 in an intermediate position between hot and cold position with the corresponding air flows; and
Figure 4 shows the heating and air conditioning system from Figure 1 in cold position with the corresponding air flow.

In the figures and the following description of special embodiments, identical or similar parts are referred to with the same reference numbers.

The heating, ventilation and air conditioning system for a motor vehicle according to the invention shown in the figures comprises an air inlet opening 58 and an air filter 52 arranged fluidically upline of a fan 54. Arranged fluidically downline of the fan is an evaporator or cooling heat exchanger 56. The ambient air cooled in the evaporator or the ambient air admitted when the evaporator is switched off is directed to the drum-type flap 24. This can distribute the air flow steplessly between a first volume 22 and a second volume 26.

Arranged fluidically downline of the first volume is a (heating) heat exchanger 20 and a by-pass 36 with a constriction or taper 34 to which a second flap 32 is assigned. The flap 32 is thereby arranged fluidically at the end of the by-pass.

It goes without saying that the flap can also be arranged at another point of the by-pass to bar the latter in a suitable manner.

Arranged fluidically downline of the flap 32 and the heat exchanger 20 is a mixing chamber 30. The mixing chamber is furthermore connected to the first volume 26 and has several air louvres (38, 39, 40, 42). The air louvres can thereby be used to supply air to different zones of the passenger compartment. The louvre 40 can be one or more defroster nozzles for ventilation of the motor vehicle windows, in particular the windscreen, and can have a further flap for selective air flow control.

The air outlet 38 can, for example, lead via further conduits (not illustrated) to foot space nozzles. The air outlet 39 can, for example, also lead via further conduits (not illustrated) to further nozzles or louvres, e.g. in the rear of the passenger compartment. It will be obvious to persons skilled in the art that these outlets can also have flaps to control the air flow.

The air outlet 42 shown in the figures also with a dedicated assigned flap can, for example, be a dashboard nozzle that directs the air flow to the passengers, for example, through openings in the dashboard when the corresponding flap is open.

The louvres or nozzles can comprise further air guide means with which the air can be directed to specific points in the passenger compartment.

It will be obvious to persons skilled in the art that in addition, further outlets can be arranged at random on the mixing chamber. Furthermore, the outlets shown here are to be regarded as representative for several outlets arranged in parallel, e.g. on each side of the foot space or/and of the dashboard.

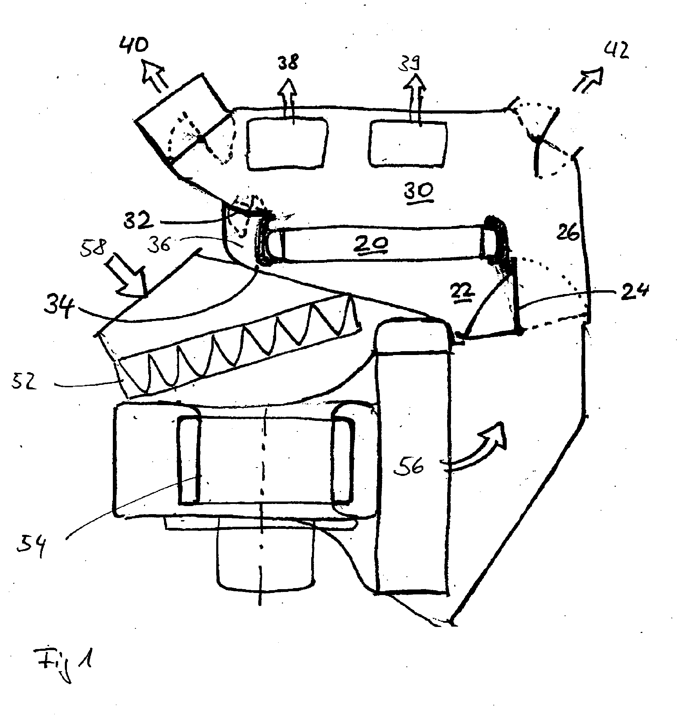

Figure 1 shows the heating, ventilation and air conditioning system according to the invention with the flaps each in one position, wherein the movement range of the flaps is indicated with dotted lines.

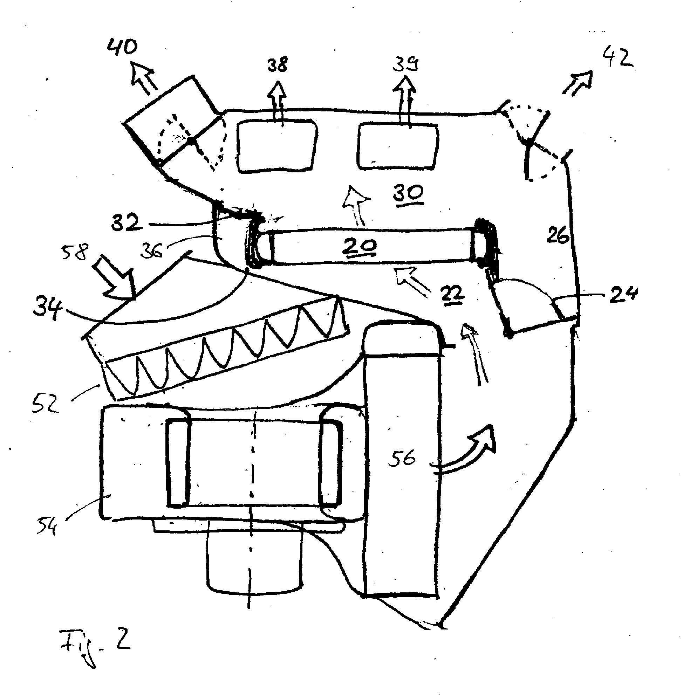

Figure 2 shows the heating, ventilation and air conditioning system according to the invention in the hot position with maximum heating power. In order to achieve a maximum heating power, the evaporator 56 is thereby switched off. The air flow from the evaporator is thereby directed completely into the first volume by means of the flap 24. As the by-pass is barred by means of the second flap 32, the complete air flow is heated in the heat exchanger 20 and directed into the mixing chamber 30. In this hot position, the whole mixing chamber is filled with warm air that is then directed to the desired louvres, depending on the position of the outlet flaps. In the positions shown here, for example, the dashboard nozzles 42 are open while the defroster nozzle 40 is closed.

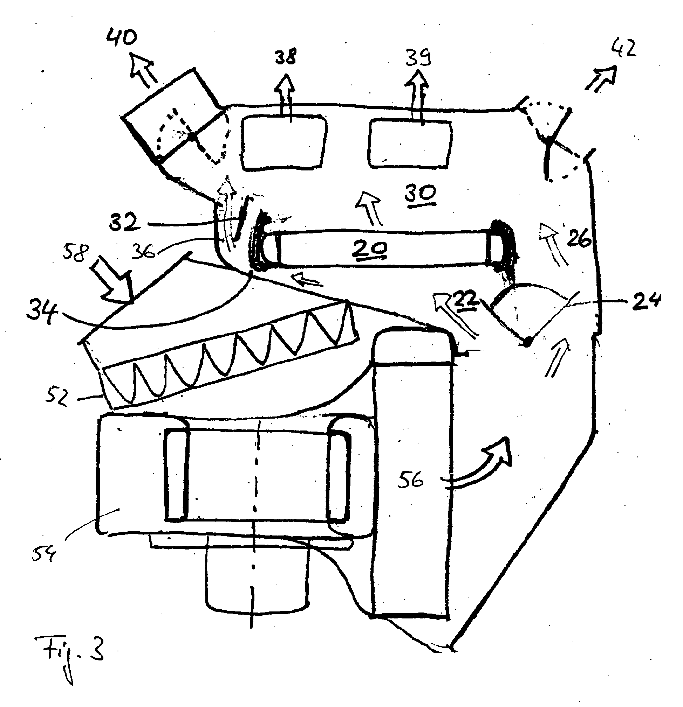

Figure 3 shows the heating, ventilation and air conditioning system according to the invention in an intermediate position between a hot position and a cold position. The evaporator 56 can be hereby switched off or on, depending on the desired operating mode. The flap 24 is in a middle position, so that a first part of the air flow is directed into the first volume 22 and a second part of the air flow into the second volume 26. The portion directed into the second volume passes directly to the mixing chamber 30 while the part directed into the first volume is distributed between the heat exchanger 20 and the by-pass 36 that is open in this intermediate position. From the heat exchanger 20 and the by-pass 36, the air flow is directed further to the mixing chamber 30. The second flap 32 at the end of the by-pass is thereby completely open.

The by-pass also has a taper or constriction 34 whose cross section is smaller than the cross section of the by-pass at the flap 32. The air flow resistance of the by-pass is therefore determined by the cross section of the taper and is independent of the position of the second flap 32 if the latter is not completely closed. The distribution of the air flow directed into the first volume 22 by means of the first flap 24 between the heat exchanger and the by-pass 36 therefore has a constant relationship as soon as the second flap 32 is opened.

An air stratification is thus created in the mixing chamber 30 with a first cold air section at the by-pass and close to the defroster nozzle 40, a warm air section above the heat exchanger 20 and hence near the outlets 38 and 39 and a second cold air section close to the second volume 26 and the dashboard nozzles 42. The distribution of the three sections can thereby be controlled via the position, predominantly of the first flap 24.

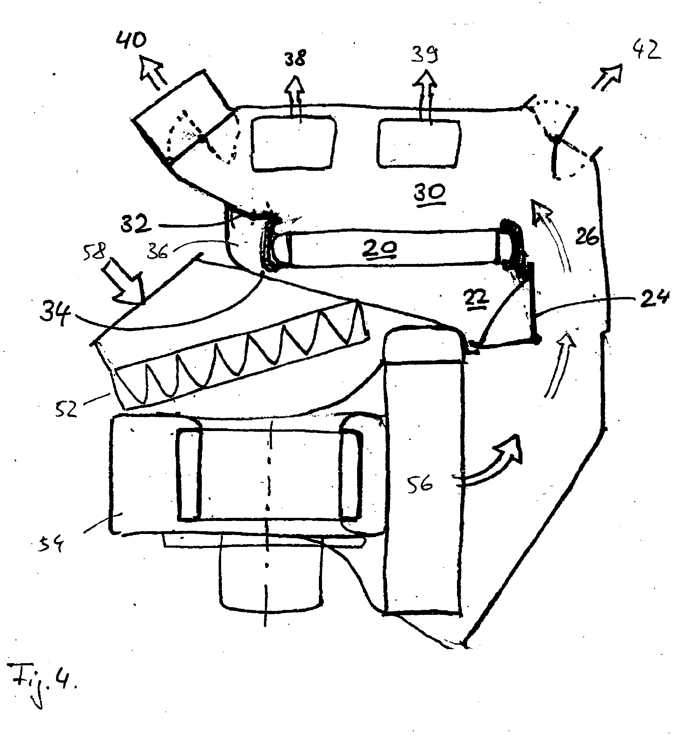

Figure 4 finally shows the heating, ventilation and air conditioning system according to the invention in the cold position in which flap 24 closes the first volume 22 and the whole air flow that may have been cooled by the evaporator is directed into the second volume 26 and further into the mixing chamber 30. In this cold position, the whole mixing chamber is filled with cold air that is then directed to the desired outlets, depending on the position of the outlet flaps. In the positions shown here, for example, the dashboard nozzles 42 are open while the defroster nozzle 40 is closed.

Further intermediate positions will be obvious to persons skilled in the art.

It is also obvious that the embodiment of the invention described here by reference to the figures is only of an exemplary nature and that other embodiments are possible.

For example, the by-pass and/or second volume can be arranged differently in relation to the heat exchanger in order to achieve a different stratification or other type of air distribution in the mixing chamber. In particular, a spatial arrangement is also possible instead of the stratification described by reference to the figures.

Furthermore, a person skilled in the art will also recognise other embodiments of the mixing chamber and other possibilities for the arrangement or extension of the openings. In addition, further openings to which additional air flow control means such as flaps and/or air guide elements can be assigned, can be assigned for example to the first volume or/and the by-pass in order to permit ventilation of suitable points in the motor vehicle.

The present invention thus provides a ventilation or air conditioning system that advantageously achieves an air stratification of cold and warm air areas in the mixing chamber so that air can be supplied at different temperature to different zones in the passenger compartment. According to the invention, the use of a large number of conduits with further flaps downline of the heat exchanger common in multi-air conditioning systems is thereby avoided.

## Claims

1. Heating and ventilation system for a motor vehicle comprising
- A heat exchanger (20) arranged between a first volume (22) suitable for supplying a first air flow to the heat exchanger and a mixing chamber (30),
- A second volume (26) arranged fluidically parallel to the first volume and fluidically parallel to the heat exchanger and suitable for diverting a second air flow past the heat exchanger into the mixing chamber (30),
- A first air flow control device (24) provided fluidically upline of the first volume (22) and the second volume (26) to control the air volume flowing through the first volume or/and the second volume, **characterized in that**
a by-pass (36) is arranged fluidically downline of the first air flow control device (24) between the first volume (22) and the mixing chamber (30).

2. Heating and ventilation system according to Claim 1, wherein a second air flow control device (32) is assigned to the by-pass (36).

3. Heating and ventilation system according to Claim 1 or 2, wherein the by-pass (36) is arranged at an opposite end of the heat exchanger (20) from the second volume (26), and in at least one position of the air flow control devices, the air flow heated by the heat exchanger is flanked on one side in the mixing chamber (30) by an air flow from the by-pass.

4. Heating and ventilation system according to one of the preceding claims, wherein at least one outlet (40) is arranged close to a distal end section of the heat exchanger with respect to the first air flow control device, in particular with spatial assignment of the by-pass.

5. Heating and ventilation system according to one of Claims 2 to 4, wherein the second air flow control device (32) is a flap and arranged such that it closes the by-pass in a first position and opens it in a second position.

6. Heating and ventilation system according to one of Claims 2 to 5, wherein the second air flow control device (32) is a butterfly flap.

7. Heating and ventilation system according to one of the preceding claims, wherein the by-pass (36) has a taper (34) with a smaller cross section than a cross section that can be closed off by the second air flow control device (32).

8. Heating and ventilation system according to one of the preceding claims, wherein the heat exchanger (20) is arranged between the first volume (22) and the mixing chamber (30) in such a way that the first air flow enters at an angle of 0° to 60°, preferably at an angle of 0° to 45°.

9. Heating and ventilation system according to one of Claims 2 to 8, wherein the first air flow control device (24) and the second air flow control device (32) are correlated and can be controlled, with an operating element.

10. Heating and ventilation system according to one of Claims 2 to 9, wherein the first air flow control device (24) can be set with linear intermediate positions between a hot position in which the air flow is directed via the first volume, and a cold position in which the air flow is directed through the second volume, and wherein the first air flow control device and the second air flow control device (32) are correlated in such a way that in the hot position of the first air flow control device, the second air flow control device (32) is closed, and in the intermediate positions of the first air flow control device the second air flow control device is open.

11. Heating and ventilation system according to one of Claims 2 to 10, wherein the first air flow control device (24) can be set with linear intermediate positions between a hot position in which the air flow is directed via the first volume, and a cold position in which the air flow is directed through the second volume, and wherein the first air flow control device and the second air flow control device (32) are correlated in such a way that in the cold position of the first air flow control device, the second air flow control device (32) is closed, and in the intermediate positions of the first air flow control device the second air flow control device is open.

12. Heating and ventilation system according to one of the preceding claims, wherein the first air flow control device (24) is a flap, in particular a drum-type flap.

13. Heating and ventilation system according to one of the preceding claims, wherein an evaporator (56) of an air conditioning system is arranged fluidically upline of a first air flow control device (24), wherein the evaporator and the heat exchanger (20) are arranged to form an angle of roughly 45 to 135 degrees, in particular perpendicularly, to one another.

14. Heating and ventilation system according to Claim 13, wherein the evaporator (56) and the heat exchanger (20) are arranged in such a way that the evaporator is arranged at least partially, in particular completely, in a projection volume perpendicular to a main surface of the heat exchanger.

15. Heating and ventilation system according to Claim 13 or 14, wherein an air filter (52) is arranged fluidically upline of the evaporator (56), whereby the evaporator (56) and the air filter are arranged to form an angle of roughly 45 to 135 degrees, and whereby the air filter and the heat exchanger (20) are offset from one another and arranged to mutually overlap in vertical and/or horizontal direction.

## Patentansprüche

1. Heizungs- und Belüftungssystem für ein Kraftfahrzeug, umfassend
- einen Wärmeaustauscher (20), der zwischen einem ersten Raum (22), der dafür geeignet ist, den Wärmeaustauscher mit einem ersten Luftausstoß zu versorgen, und einer Mischkammer (30) angeordnet ist,
- einen zweiten Raum (26), der fluidisch parallel zum ersten Raum und fluidisch parallel zum Wärmeaustauscher angeordnet und dafür geeignet ist, einen zweiten Luftausstoß am Wärmeaustauscher vorbei in die Mischkammer (30) umzuleiten,
- eine erste Luftausstoßverstellvorrichtung (24), die dem ersten Raum (22) und dem zweiten Raum (26) fluidisch vorgelagert ist, um das Luftvolumen, das durch den ersten Raum oder / und den zweiten Raum fließt, zu steuern, **dadurch gekennzeichnet, dass** ein Austritt (36) zwischen dem ersten Raum (22) und der Mischkammer (30) angeordnet und der ersten Luftausstoßverstellvorrichtung (24) nachgelagert ist.

2. Heizungs- und Belüftungssystem nach Anspruch 1, wobei eine zweite Luftausstoßverstellvorrichtung (32) dem Austritt (36) zugeordnet ist.

3. Heizungs- und Belüftungssystem nach Anspruch 1 oder 2, wobei der Austritt (36) an einem gegenüberliegenden Ende des Wärmeaustauschers (20) vom zweiten Raum (26) angeordnet ist, und der Luftausstoß, der vom Wärmeaustauscher erwärmt wird, in zumindest einer Position der Luftausstoßverstellvorrichtungen auf einer Seite in der Mischkammer (30) von einem Luftausstoß aus dem Austritt flankiert wird.

4. Heizungs- und Belüftungssystem nach einem der vorhergehenden Ansprüche, wobei zumindest eine Ausströmung (40) in der Nähe eines distalen Endabschnittes des Wärmeaustauschers in Bezug auf die erste Luftausstoßverstellvorrichtung, insbesondere mit räumlichem Übergang vom Austritt angeordnet ist.

5. Heizungs- und Belüftungssystem nach einem der Ansprüche 2 bis 4, wobei die zweite Luftausstoßverstellvorrichtung (32) eine Klappe und so angeordnet ist, dass sie den Austritt in einer ersten Position verschließt und in einer zweiten Position öffnet.

6. Heizungs- und Belüftungssystem nach einem der Ansprüche 2 bis 5, wobei die zweite Luftausstoßverstellvorrichtung (32) eine Drosselklappe ist.

7. Heizungs- und Belüftungssystem nach einem der vorhergehenden Ansprüche, wobei der Austritt (36) eine Verjüngung (34) mit einem Querschnitt aufweist, der kleiner ist als ein Querschnitt, der von der zweiten Luftausstoßverstellvorrichtung (32) verschlossen werden kann.

8. Heizungs- und Belüftungssystem nach einem der vorhergehenden Ansprüche, wobei der Wärmeaustauscher (20) zwischen dem ersten Raum (22) und der Mischkammer (30) so angeordnet ist, dass der erste Luftausstoß in einem Winkel von 0° bis 60° eintritt, vorzugsweise in einem Winkel von 0° bis 45°.

9. Heizungs- und Belüftungssystem nach einem der Ansprüche 2 bis 8, wobei die erste Luftausstoßverstellvorrichtung (24) und die zweite Luftausstoßverstellvorrichtung (32) in Wechselbeziehung stehen und mit einem Bedienelement gesteuert werden können.

10. Heizungs- und Belüftungssystem nach einem der Ansprüche 2 bis 9, wobei die erste Luftausstoßverstellvorrichtung (24) mit linearen Zwischenpositionen zwischen einer Heißposition, in der der Luftausstoß über den ersten Raum geleitet wird, und einer Kaltposition, in der der Luftausstoß durch den zweiten Raum geleitet wird, verstellt werden kann, und wobei die erste Luftausstoßverstellvorrichtung und die zweite Luftausstoßverstellvorrichtung (32) in derartiger Wechselbeziehung stehen, dass in der Heißposition der ersten Luftausstoßverstellvorrichtung die zweite Luftausstoßverstellvorrichtung (32) geschlossen ist, und in den Zwischenpositionen der ersten Luftausstoßverstellvorrichtung die zweite Luftausstoßverstellvorrichtung offen ist.

11. Heizungs- und Belüftungssystem nach einem der Ansprüche 2 bis 10, wobei die erste Luftausstoßverstellvorrichtung (24) mit linearen Zwischenpositionen zwischen einer Heißposition, in der der Luftausstoß über den ersten Raum geleitet wird, und einer Kaltposition, in der der Luftausstoß durch den zweiten Raum geleitet wird, verstellt werden kann, und wobei die erste Luftausstoßverstellvorrichtung und die zweite Luftausstoßverstellvorrichtung (32) in derartiger Wechselbeziehung stehen, dass in der Kaltposition der ersten Luftausstoßverstellvorrichtung die zweite Luftausstoßverstellvorrichtung (32) geschlossen ist, und in den Zwischenpositionen der ersten Luftausstoßverstellvorrichtung die zweite Luftausstoßverstellvorrichtung offen ist.

12. Heizungs- und Belüftungssystem nach einem der vorhergehenden Ansprüche, wobei die erste Luftausstoßverstellvorrichtung (24) eine Klappe ist, insbesondere eine Trommelklappe.

13. Heizungs- und Belüftungssystem nach einem der vorhergehenden Ansprüche, wobei der ersten Luftausstoßverstellvorrichtung (24) ein Verdampfer (56) eines Klimasteuerungssystems fluidisch vorgelagert ist, wobei der Verdampfer und der Wärmeaustauscher (20) angeordnet sind, um einen Winkel von ungefähr 45 bis 135 Grad zu bilden, insbesondere senkrecht zueinander.

14. Heizungs- und Belüftungssystem nach Anspruch 13, wobei der Verdampfer (56) und der Wärmeaustauscher (20) so angeordnet sind, dass der Verdampfer zumindest teilweise, insbesondere vollständig, in einem vorstehenden Raum senkrecht zu einer Hauptoberfläche des Wärmeaustauschers angeordnet ist.

15. Heizungs- und Belüftungssystem nach Anspruch 13 oder 14, wobei ein Luftfilter (52) dem Verdampfer (56) fluidisch vorgelagert ist, wobei der Verdampfer (56) und der Luftfilter angeordnet sind, um einen Winkel von ungefähr 45 bis 135 Grad zu bilden, und wobei der Luftfilter und der Wärmeaustauscher (20) voneinander abgesetzt und angeordnet sind, um sich gegenseitig in vertikaler und / oder horizontaler Richtung zu überlappen.

## Revendications

1. Système de chauffage et ventilation pour véhicule motorisé comprenant :
- un échangeur de chaleur (20) agencé entre un premier volume (22) approprié pour fournir un premier écoulement d'air à l'échangeur de chaleur et une chambre de mélange (30),
- un second volume (26) agencé de façon parallèlement fluidique au premier volume et de façon parallèlement fluidique à l'échangeur de chaleur et approprié pour dévier un second écoulement d'air au-delà de l'échangeur de chaleur dans la chambre de mélange (30),
- un dispositif de contrôle de premier écoulement d'air (24) prévu de façon fluidique en amont du premier volume (22) et du second volume (26) pour contrôler le volume d'air s'écoulant à travers le premier volume ou/et le second volume, **caractérisé en ce que**
une dérivation (36) est agencée de façon fluidique en aval du dispositif de contrôle de premier écoulement d'air entre le premier volume et la chambre de mélange (30).

2. Système de chauffage et ventilation selon la revendication 1, dans lequel un dispositif de contrôle de second écoulement d'air (32) est attribué à la dérivation (36).

3. Système de chauffage et ventilation selon la revendication 1 ou 2, dans lequel la dérivation (36) est agencée sur une extrémité opposée de l'échangeur de chaleur (20) par rapport au second volume (26), et dans au moins une position des dispositifs de contrôle d'écoulement d'air, l'écoulement d'air chauffé par l'échangeur de chaleur est flanqué sur un côté dans la chambre de mélange (30) par un écoulement d'air à partir de la dérivation.

4. Système de chauffage et ventilation selon une des revendications précédentes, dans lequel au moins une sortie (40) est agencée près d'une section d'extrémité distale de l'échangeur de chaleur par rapport au dispositif de contrôle de premier écoulement d'air, en particulier avec une attribution spatiale de la dérivation.

5. Système de chauffage et ventilation selon une des revendications 2 à 4, dans lequel le dispositif de contrôle de second écoulement d'air (32) est un volet et agencé de sorte qu'il ferme la dérivation dans une première position et l'ouvre dans une seconde position.

6. Système de chauffage et ventilation selon une des revendications 2 à 5, dans lequel le dispositif de contrôle de second écoulement d'air (32) est un volet papillon.

7. Système de chauffage et ventilation selon une des revendications précédentes, dans lequel la dérivation (36) possède une conicité (34) avec une section transversale plus petite qu'une section transversale qui peut être fermée par le dispositif de contrôle de second écoulement d'air (32).

8. Système de chauffage et ventilation selon une des revendications précédentes, dans lequel l'échangeur de chaleur (20) est agencé entre le premier volume (22) et la chambre de mélange (30) de manière telle que le premier écoulement d'air entre à un angle de 0° à 60°, de préférence à un angle de 0° à 45°.

9. Système de chauffage et ventilation selon une des revendications 2 à 8, dans lequel le dispositif de contrôle de premier écoulement d'air (24) et le dispositif de contrôle de second écoulement d'air (32) sont corrélés et peuvent être commandés, avec un élément de commande.

10. Système de chauffage et ventilation selon une des revendications 2 à 9, dans lequel le dispositif de contrôle de premier écoulement d'air (24) peut être réglé avec des positions intermédiaires linéaires entre une position chaude, dans laquelle l'écoulement d'air est dirigé par l'intermédiaire du premier volume, et une position froide, dans laquelle l'écoulement d'air est dirigé à travers le second volume, et dans lequel le dispositif de contrôle de premier écoulement d'air et le dispositif de contrôle de second écoulement d'air (32) sont corrélés de manière telle que, dans la position chaude du dispositif de contrôle de premier écoulement d'air, le dispositif de contrôle de second écoulement d'air (32) soit fermé, et, dans les positions intermédiaires du dispositif de contrôle de premier écoulement d'air, le dispositif de contrôle de second écoulement d'air soit ouvert.

11. Système de chauffage et ventilation selon une des revendications 2 à 10, dans lequel le dispositif de contrôle de premier écoulement d'air (24) peut être réglé avec des positions intermédiaires linéaires entre une position chaude, dans laquelle l'écoulement d'air est dirigé par l'intermédiaire du premier volume, et une position froide, dans laquelle l'écoulement d'air est dirigé à travers le second volume, et dans lequel le dispositif de contrôle de premier écoulement d'air et le dispositif de contrôle de second écoulement d'air (32) sont corrélés de manière telle que, dans la position froide du dispositif de contrôle de premier écoulement d'air, le dispositif de contrôle de second écoulement d'air (32) soit fermé, et, dans les positions intermédiaires du dispositif de contrôle de premier écoulement d'air, le dispositif de contrôle de second écoulement d'air soit ouvert.

12. Système de chauffage et ventilation selon une des revendications précédentes, dans lequel le dispositif de contrôle de premier écoulement d'air (24) est un volet, en particulier un volet à tambour.

13. Système de chauffage et ventilation selon une des revendications précédentes, dans lequel un évaporateur (56) d'un système de climatisation est agencé de façon fluidique en amont d'un dispositif de contrôle de premier écoulement d'air (24), dans lequel l'évaporateur et l'échangeur de chaleur (20) sont agencés pour former un angle d'approximativement 45 à 135 degrés, en particulier perpendiculairement, l'un par rapport à l'autre.

14. Système de chauffage et ventilation selon la revendication 13, dans lequel l'évaporateur (56) et l'échangeur de chaleur (20) sont agencés de manière telle que l'évaporateur soit agencé au moins partiellement, en particulier complètement, dans un volume de projection perpendiculaire à une surface principale de l'échangeur de chaleur.

15. Système de chauffage et ventilation selon la revendication 13 ou 14, dans lequel un filtre à air (52) est agencé de façon fluidique en amont de l'évaporateur (56), moyennant quoi l'évaporateur (56) et le filtre à air sont agencés pour former un angle d'approximativement 45 à 135 degrés, et moyennant quoi le filtre à air et l'échangeur de chaleur (20) sont décalés l'un par rapport à l'autre et agencés pour se chevaucher mutuellement dans une direction verticale et/ou horizontale.
